# EUROPÄISCHE PATENTANMELDUNG

(11) **EP 3 895 937 A1**
(43) Veröffentlichungstag der Anmeldung: **20.10.2021**
(21) Anmeldenummer: 21167894.1
(22) Anmeldetag: 12.04.2021
(51) Int. Cl.: B60P 1/28

(54) **VERFAHREN ZUM HERSTELLEN EINES KIPPBRÜCKEN-UNTERBAUS**

(30) Priorität: 16.04.2020 DE 102020110387
(71) Anmelder: Franz Xaver Meiller Fahrzeug- und Maschinenfabrik-GmbH & Co. KG, 80997 München (DE)
(72) Erfinder: POPP, Klaus, 82346 Andechs (DE)
(74) Vertreter: Feller, Frank

(57) **Zusammenfassung**

Die vorliegende Erfindung betrifft ein Verfahren zum Herstellen eines Kippbrücken-Unterbaus (10) für ein Kipper-Fahrzeug, umfassend die folgenden Schritte: Bereitstellen einer Mehrzahl von Komponenten (12 - 26) des Kippbrücken-Unterbaus (10), wobei die einzelnen Komponenten (12 - 26) paarweise mit Ausnehmungs- und Hakenelementen für ein Verbinden davon versehen werden; Verbinden der Komponenten (12 - 26) mithilfe der entsprechenden Ausnehmungs- und Hakenelemente (28a, 28b) in dafür vorgesehenen relativen Positionen zueinander; und Verschweißen der miteinander verbundenen Komponenten (12 - 26) mittels eines Schweißprozesses. Ferner betrifft die Erfindung einen Kippbrücken-Unterbau (10) für ein Kipper-Fahrzeug, hergestellt durch ein erfindungsgemäßes Verfahren und ein Kipper-Fahrzeug, umfassend einen erfindungsgemäßen Kippbrücken-Unterbau (10).

## Beschreibung

Die vorliegende Erfindung betrifft ein Verfahren zum Herstellen eines Kippbrücken-Unterbaus für ein Kipper-Fahrzeug sowie einen Kippbrücken-Unterbau, welcher durch ein derartiges Verfahren hergestellt ist, und ein einen derartigen Kippbrücken-Unterbau umfassendes Kipper-Fahrzeug.

In bisher verwendeten Verfahren zum Herstellen von Kippbrücken-Unterbauten für Kipper-Fahrzeuge sind die Einzelteile des herzustellenden Kippbrücken-Unterbaus, beispielsweise seitliche Schüttleisten, Querträgerprofile, Stirnträger, hintere Schüttleisten und Gelenkbandlager, in konventionelle Heftvorrichtungen eingelegt worden, durch Spannvorrichtungen fixiert worden und im Metall-Aktivgas (MAG)-Schweißverfahren vorläufig in ihrer beabsichtigten relativen Positionierung zueinander verschweißt ("geheftet") worden, um sie für ein endgültiges Verschweißen vorzubereiten.

Es zeigt sich jedoch, dass dieses aus dem Stand der Technik bekannte Herstellungsverfahren einige Nachteile hat. Beispielsweise ist durch das sorgfältige manuelle Einlegen der Einzelteile in die Heftvorrichtung ein erheblicher Zeitaufwand vonnöten, der sich unweigerlich in den Herstellungskosten niederschlagen wird. Dies gilt insbesondere, da auch die Heftvorrichtung selbst zunächst einmal angeschafft werden muss und sich somit in den Kosten der Herstellung des Kippbrücken-Unterbaus niederschlagen wird.

Weiterhin sind die mit der Herstellung betrauten Personen beim Durchführen des beschriebenen Verfahrens an einen vorgegebenen Montageplatz gebunden, da die angesprochene Heftvorrichtung an sich nicht in praktikablem Maße mobil ist. Zuletzt hat es sich ebenfalls herausgestellt, dass in dem beschriebenen Verfahren aus dem Stand der Technik die Einhaltung von Toleranzen und vorgegebenen Maßen schwierig ist und ebenfalls einen erhöhten Aufwand und einen erheblichen Zeitbedarf mit sich bringt.

Es ist somit die Aufgabe der vorliegenden Erfindung, ein verbessertes Verfahren zum Herstellen eines Kippbrücken-Unterbaus für ein Kipper-Fahrzeug bereitzustellen, mit dem einerseits Montagezeiten und damit Kosten eingespart werden können und durch welches andererseits durch Verzicht auf ein Heftschweißen und damit eine Heftvorrichtung eine erhöhte Flexibilität erzielt wird.

Zur Lösung dieser Aufgabe umfasst das erfindungsgemäße Verfahren die folgenden Schritte:
- Bereitstellen einer Mehrzahl von Komponenten des Kippbrücken-Unterbaus, wobei die einzelnen Komponenten paarweise mit Ausnehmungs- und Hakenelementen für ein Verbinden davon versehen werden;
- Verbinden der Komponenten mithilfe der entsprechenden Ausnehmungs- und Hakenelemente in dafür vorgesehenen relativen Positionen zueinander; und
- Verschweißen der miteinander verbundenen Komponenten mittels eines Schweißprozesses.

Hierbei versteht sich, dass die Begriffe der "Ausnehmungselemente" und "Hakenelemente" breit zu verstehen sind und im Wesentlichen sämtliche Vorrichtungen umfassen sollen, welche ein Einhaken, Einrasten, Einschnappen oder ganz allgemein einen Formschluss in für den vorliegenden Zweck geeigneter Weise ermöglichen.

Indem auf diese Weise das erfindungsgemäße Verfahren darauf beruht, die Komponenten des Kippbrücken-Unterbaus jeweils paarweise mit Elementen zum mechanischen Verbinden beziehungsweise Einrasten oder Einschnappen miteinander bereitzustellen, kann auf ein Heftschweißen und die Verwendung einer Einlegeheftvorrichtung vollständig verzichtet werden, wodurch eine erhebliche Beschleunigung und damit auch Kostenreduzierung des Herstellungsprozesses erzielt werden kann, was dadurch noch verstärkt wird, dass das Einmessen, Spannen und Richten der Bauteile in diesem Herstellungsverfahren entfällt, während andererseits auch keine Bindung an einen Fertigungsort oder eine Fertigungsvorrichtung mehr beachtet werden muss.

In einer beispielhaften Ausführungsform kann das erfindungsgemäße Verfahren ferner ein Bereitstellen eines Bodenblechs für den Kippbrücken-Unterbau umfassen, auf welchem vorzugsweise der Schritt des Verbindens der Komponenten durchgeführt wird. Hierbei kann das Bodenblech insbesondere selbst ebenfalls mit Ausnehmungs- und oder Hakenelementen bereitgestellt sein. Auf diese Weise kann gewissermaßen bereits eine vorläufige vollständige Anordnung von sämtlichen Komponenten des herzustellenden Kippbrücken-Unterbaus vor dem eigentlichen Schweißvorgang lediglich durch Zusammenwirkung der Ausnehmungs- und Hakenelemente erzielt werden.

Wenngleich beliebige Typen von Komponenten des herzustellenden Kippbrücken-Unterbaus für das erfindungsgemäße Verfahren bereitgestellt und miteinander verbunden werden können, so kann dieses Verbinden der Komponenten ein Verbinden von wenigstens einem der folgenden Paare von Komponenten beziehungsweise ein aufeinander folgendes Verbinden entsprechender Paare in dieser oder einer modifizierten Reihenfolge umfassen:
- Kopftraverse und/oder seitliche Schüttleisten und/oder Querträgerprofile mit Bodenblech;
- seitliche Schüttleisten mit Querträgerprofilen;
- Querträgerprofile mit Längsträgern;
- seitliche Schüttleisten und/oder Längsträger mit Stirnträgern und/oder einer hinteren Schüttleiste;
- Gelenkbandlager mit seitlichen Schüttleisten und/oder hinterer Schüttleiste;
- Kipplager-Befestigungskonsolen mit Querträgerprofilen und/oder Längsträgern.

In einer bevorzugten Ausführungsform kann ferner das Bereitstellen der Mehrzahl von Komponenten ein Schneiden, insbesondere ein Laserschneiden von wenigstens einigen, vorzugsweise sämtlichen, der Komponenten umfassen. Dieser Herstellungsvorgang mittels eines Laserschweißens stellt sich als effiziente und maßgenaue Möglichkeit dar, die entsprechenden Komponenten zusammen mit ihren Ausnehmungs- und/oder Hakenelementen zu fertigen.

Weiterhin betrifft die vorliegende Erfindung einen Kippbrücken-Unterbau für ein Kipperfahrzeug, welcher durch ein erfindungsgemäßes Verfahren hergestellt ist und beispielsweise auch an bereits bestehenden Kipperfahrzeugen nachgerüstet werden könnte, sowie auch ein Kipperfahrzeug, welches bereits werkseitig einen derartigen Kipperbrücken-Unterbau umfasst. Hierbei versteht sich, dass eine Mehrzahl von Komponenten des Kippbrücken-Unterbaus paarweise mit Ausnehmungs- und Hakenelementen für ein Verbinden davon in der oben beschriebenen Weise versehen sind.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Fig. 1: die Komponenten eines mittels eines erfindungsgemäßen Verfahrens herzustellenden Kippbrücken-Unterbaus in noch nicht montiertem Zustand;
- Fig. 2: der aus den Komponenten aus Figur 1 hergestellte Kippbrücken-Unterbau in fertig hergestelltem Zustand; und
- Fig. 3a und 3b: Detailansichten von zwei möglichen Verbindungstypen von zwei Komponenten aus Figur 2.

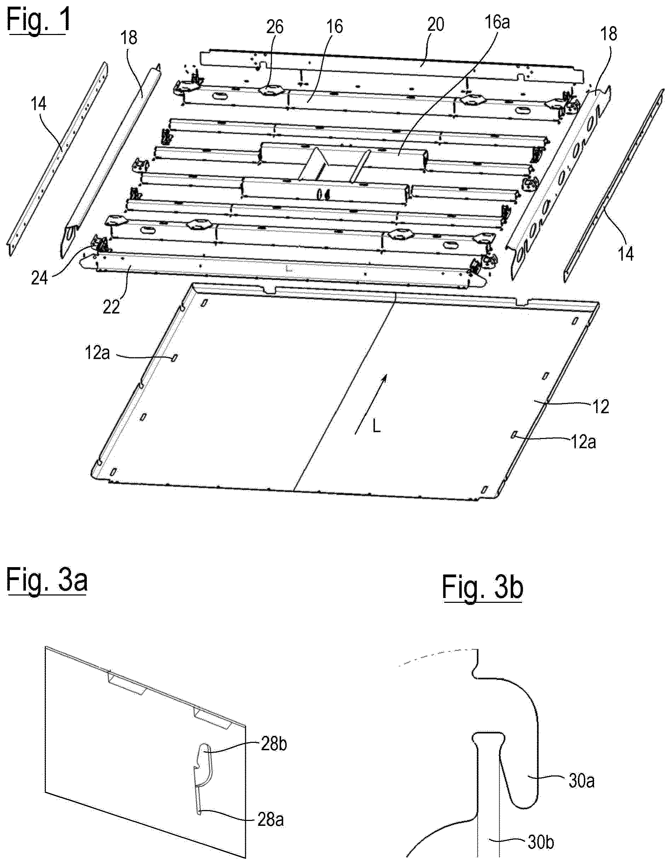

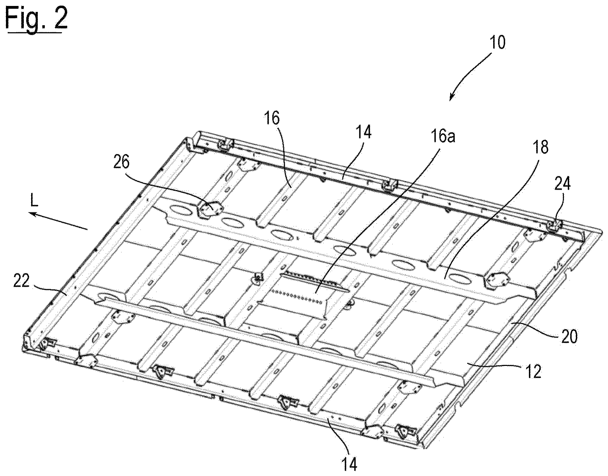

In Figur 1 ist zunächst einmal eine Anzahl von Komponenten dargestellt, welche nach dem Durchführen eines erfindungsgemäßen Herstellungsverfahrens den in Figur 2 dargestellten und fertig montierten Kippbrücken-Unterbau 10 bilden werden.

Die Komponenten umfassen ein Bodenblech 12, welches mit Ausnehmungselementen 12a an seinen äußeren Seiten bezüglich der Längsrichtung L des herzustellenden Kippbrücken-Unterbaus 10 gebildet ist. In diese Ausnehmungselemente 12a sind nun in einem ersten Herstellungsschritt komplementäre Haken von seitlichen Schüttleisten 14 einhakbar, welche wiederum über ähnliche zusammenwirkende Paare von Ausnehmungs- und Hakenelementen mit Querträgerprofilen 16 verbindbar sind, wobei in die parallele Anordnung aus Querträgerprofilen 16 ferner eine Kopftraverse 16a integriert ist.

Nach dem Verbinden der Querträgerprofile 16 und der Kopftraverse 16a mit den seitlichen Schüttleisten 14 werden nun wiederum die Querträgerprofile 16 mit zwei Längsträgern 18 durch zusammenwirkende Paare von Ausnehmungs- und Hakenelementen oder in Varianten einer solchen Ausführungsform durch einfaches formschlüssiges Einlegen oder Aufstecken verbunden. Im nächsten Schritt werden ein Stirnträger 20 und eine hintere Schüttleiste 22 in gleicher Weise eingehakt, eingelegt und/oder aufgesteckt, sodass zu diesem Zeitpunkt sämtliche Trägerstrukturen mit dem Bodenblech direkt oder indirekt verbunden sind.

Anschließend werden noch Gelenkbandlager 24 an den seitlichen Schüttleisten und/oder der hinteren Schüttleiste angebracht und Kipplager-Befestigungskonsolen 26 an den Querträgerprofilen 16 und/oder den Längsträgern angebracht.

In diesem Zustand können die, wie bereits in Figur 2 dargestellt, angeordneten Komponenten des Kippbrücken-Unterbaus 10 in gewohnter Weise miteinander verschweißt werden, wodurch die Herstellung davon abgeschlossen ist.

Zuletzt sei noch auf die Figuren 3a und 3b verwiesen, welche Detailansichten von zwei möglichen Verbindungstypen von zwei Komponenten aus den Figuren 1 und 2 in montiertem Zustand zeigen, welche durch Ausnehmungs- und Hakenelemente 28a, 28b bzw. 30a, 30b nach einem Einhaken der Hakenelemente 28b bzw. 30b in die Ausnehmungselemente 28a bzw. 30a gebildet sind. Entsprechende Paare von zusammenwirkenden Elementen können an einigen oder allen der in Zusammenhang mit Figur 1 besprochenen miteinander zu verbindenden Paare von Komponenten wahlweise vorgesehen sein.

## Patentansprüche

1. Verfahren zum Herstellen eines Kippbrücken-Unterbaus (10) für ein Kipper-Fahrzeug, umfassend die folgenden Schritte:
- Bereitstellen einer Mehrzahl von Komponenten (12 - 26) des Kippbrücken-Unterbaus (10), wobei die einzelnen Komponenten (12 - 26) paarweise mit Ausnehmungs- und Hakenelementen (28a, 28b; 30a, 30b) für ein Verbinden davon versehen werden;
- Verbinden der Komponenten (12 - 26) mithilfe der entsprechenden Ausnehmungs- und Hakenelemente (28a, 28b; 30a, 30b) in dafür vorgesehenen relativen Positionen zueinander; und
- Verschweißen der miteinander verbundenen Komponenten (12 - 26) mittels eines Schweißprozesses.

2. Verfahren nach Anspruch 1, ferner umfassend ein Bereitstellen eines Bodenblechs (12) für den Kippbrücken-Unterbau (10), auf welchem vorzugsweise der Schritt des Verbindens der Komponenten (12 - 26) durchgeführt wird.

3. Verfahren nach Anspruch 2, wobei das Bodenblech (12) selbst ebenfalls mit Ausnehmungs- und/oder Hakenelementen (12a) bereitgestellt ist.

4. Verfahren nach einem der vorhergehenden Ansprüche, wobei das Verbinden der Komponenten (12 - 26) ein Verbinden von wenigstens einem der folgenden Paare von Komponenten (12 - 26) bzw. ein aufeinander folgendes Verbinden entsprechender Paare in dieser oder einer modifizierten Reihenfolge umfasst:
- Kopftraverse (16a) und/oder seitliche Schüttleisten (14) und/oder Querträgerprofile (16) mit Bodenblech (12);
- seitliche Schüttleisten (14) mit Querträgerprofilen (16);
- Querträgerprofile (16) mit Längsträgern (18);
- seitliche Schüttleisten (14) und/oder Längsträger (18) mit Stirnträgern (20) und/oder einer hinteren Schüttleiste (22);
- Gelenkbandlager (24) mit seitlichen Schüttleisten (14) und/oder hinterer Schüttleiste (22);
- Kipplager-Befestigungskonsolen (26) mit Querträgerprofilen (16) und/oder Längsträgern (18).

5. Verfahren nach einem der vorhergehenden Ansprüche, wobei das Bereitstellen der Mehrzahl von Komponenten (12 - 26) ein Schneiden, insbesondere ein Laserschneiden, von wenigstens einigen, vorzugsweise sämtlichen, der Komponenten (12 - 26) umfasst.

6. Kippbrücken-Unterbau (10) für ein Kipper-Fahrzeug, hergestellt durch ein Verfahren nach einem der vorhergehenden Ansprüche.

7. Kipper-Fahrzeug, umfassend einen Kippbrücken-Unterbau (10) nach Anspruch 6.
